# EUROPÄISCHE PATENTANMELDUNG

(11) **EP 3 131 279 A1**
(43) Veröffentlichungstag der Anmeldung: **15.02.2017**
(21) Anmeldenummer: 16153855.8
(22) Anmeldetag: 02.02.2016
(51) Int. Cl.: H04N 5/225, B60Q 1/00, H04N 5/33

(54) **KAMERASYSTEM FÜR EIN FAHRZEUG**

(30) Priorität: 14.08.2015 DE 102015010648
(71) Anmelder: MEKRA LANG GmbH & Co. KG, 91465 Ergersheim (DE)
(72) Erfinder: LANG, Dr. Werner, 91465 Ergersheim (DE); GEISSENDÖRFER, Peter, 91605 Gallmersgarten (DE); SNEL, Jaap-Jan, 91465 Ergersheim (DE); HEGER, Sebastian, 91478 Markt Nordheim (DE)
(74) Vertreter: Kramer Barske Schmidtchen Patentanwälte PartG mbB

(57) **Zusammenfassung**

Ein Kamerasystem für ein Fahrzeug weist eine Aufnahmeeinheit (2) zur Erfassung von Bilddaten eines Objekts in der Nähe des Fahrzeugs, eine Verarbeitungseinheit (5) zur Verarbeitung der erfassten Bilddaten, eine Wiedergabeeinheit (7) zur Wiedergabe der verarbeiteten Bilddaten und eine Beleuchtungseinheit (9) zur Beleuchtung des Objekts auf, wobei die Beleuchtungseinheit (9) ausgebildet ist zum Aussenden von Infrarotlicht durch mindestens eine IR-Lichtquelle (10), und wobei die Beleuchtungseinheit (9) mindestens ein elektrisches Funktionsbauteil (12) aufweist, das ein Teil einer anderen zum Fahrzeug gehörenden Funktionseinheit ist, und/oder die Beleuchtungseinheit (9) ausgebildet ist zum Aussenden von Licht mit einem Spektrum, das einen für das menschliche Auge sichtbaren vorbestimmten Spektralbereich aufweist.

## Beschreibung

Die vorliegende Erfindung betrifft ein Kamerasystem für ein Fahrzeug, das beispielsweise in einem Fahrerassistenzsystem bzw. Spiegelersatzsystem für Fahrzeuge, beispielsweise in Nutzfahrzeugen verwendet werden kann, insbesondere ein Kamerasystem mit einer zusätzlichen IR(Infrarot)-Beleuchtung.

Herkömmliche Kamerasysteme für ein Fahrzeug verwenden entweder eine in eine Kamera integrierte IR-Beleuchtung oder einen separat zu einer Kamera angeordneten IR-Scheinwerfer. Derartige bekannte Kamerasysteme sind jedoch für die Anwendung an einem Fahrzeug nicht optimal geeignet, aufgrund von Unzulänglichkeiten wie beispielsweise Rückreflexionen von der Beleuchtung direkt in die Kamera oder aufgrund einer zu geringen oder inhomogenen Ausleuchtung des Sichtfelds.

Aufgabe der Erfindung ist die Schaffung eines Kamerasystems mit einer zusätzlichen kostengünstigen IR-Beleuchtung für ein Fahrzeug.

Die Lösung der obigen Aufgabe erfolgt erfindungsgemäß durch ein Kamerasystem für ein Fahrzeug, das eine Aufnahmeeinheit zur Erfassung von Bilddaten eines Objekts in der Nähe des Fahrzeugs aufweist, wobei die erfassten Bilddaten von einer Verarbeitungseinheit verarbeitet werden, um auf einer Wiedergabeeinheit angezeigt zu werden. Um auch bei schlechten Lichtverhältnissen das Objekt in der Nähe des Fahrzeugs durch die Aufnahmeeinheit erfassen zu können, hat das erfindungsgemäße Kamerasystem eine Beleuchtungseinheit, wobei die Beleuchtungseinheit ausgebildet ist zum Aussenden von Infrarotlicht durch mindestens eine IR-Lichtquelle, und wobei die Beleuchtungseinheit (9) mindestens ein elektrisches Funktionsbauteil aufweist, das ein Teil einer anderen zum Fahrzeug gehörenden Funktionseinheit ist.

Eine derartige andere zum Fahrzeug gehörende Funktionseinheit ist gemäß der Erfindung beispielsweise eine Fahrzeugbeleuchtung, beispielsweise eine Blinkleuchte, Begrenzungsleuchte, ein Scheinwerfer, ein Rückfahrscheinwerfer, eine Umgebungsleuchte, eine Einstiegsleuchte, etc., und/oder ein Sensor, wie beispielsweise Radar, Ultraschall, etc., und/oder eine Einrichtung für einen Funkempfang, wie beispielsweise eine GPS-Antenne, Mautantenne, CB-Funkantenne, Radioantenne, etc., und/oder ein Bedienelement für das Fahrzeug, wie beispielsweise ein Griff/Knopf für einen Türöffner, ein Bedieneinheit für eine Ladeklappe, einen Kran, etc.

Dadurch, dass die IR-Lichtquelle zusammen mit einer zum Fahrzeug gehörenden Funktionseinheit bereitgestellt wird, die üblicherweise bereits vorhanden ist, können durch Integration in eine bestehende elektrische Funktionseinheit zusätzliche elektrische Leitungen eingespart werden. Gleichzeitig können bestehende Fahrzeuganbindungen (Anbaustellen) verwendet werden, wodurch weitere Kosten eingespart werden.

Zusätzlich oder alternativ ist die Beleuchtungseinheit für das erfindungsgemäße Kamerasystem ausgebildet zum Aussenden von Licht mit einem Spektrum, das einen für das menschliche Auge sichtbaren vorbestimmten Spektralbereich aufweist.

Gemäß der Erfindung ist die Beleuchtungseinheit als eine einzelne Lichtquelle ausgebildet, die Licht in dem sichtbaren Infrarotbereich und in dem vorbestimmten Spektralbereich aussendet. Durch das Verwenden einer einzelnen Lichtquelle kann die Anzahl der zu verwendenden Bauteile reduziert werden. Gemäß der Erfindung weist beispielsweise der sichtbare Infrarotbereich zumindest teilweise einen roten Spektralanteil auf, und der vorbestimmte Spektralbereich weist zumindest teilweise einen gelben Spektralanteil auf, so dass bei deren Mischung die Farbe Orange für das menschliche Auge wahrnehmbar ist, insbesondere Orange gemäß ECE-Regelung 48 2.29.3, in Kraft getreten am 30. Januar 2011.

Gemäß einer Weiterentwicklung der Erfindung kann die Beleuchtungseinheit mindestens eine erste Lichtquelle und mindestens eine zweite Lichtquelle aufweisen, wobei die mindestens eine erste Lichtquelle ausgebildet ist zum Aussenden von mindestens einem ersten Lichtstrahl in dem für das menschliche Auge sichtbaren Infrarotbereich, und die mindestens eine zweite Lichtquelle ausgebildet ist zum Aussenden von mindestens einem zweiten Lichtstrahl in dem für das menschliche Auge sichtbaren vorbestimmten Spektralbereich, wobei der mindestens eine erste Lichtstrahl und der mindestens eine zweite Lichtstrahl sich Überlappen zur Erzeugung eines gemischten Lichtstrahls, der von dem menschlichen Auge wahrnehmbar ist. Auf diese Weise kann beispielsweise durch geeignete Wahl des vorbestimmten Spektralbereichs (beispielsweise Gelb) die Beleuchtungseinheit als Fahrzeugbeleuchtung verwendet werden, die Licht in einer gewünschten Spektralfarbe aussendet, beispielsweise Orange, wie oben definiert.

Gemäß einer weiteren Ausgestaltung der Erfindung überlappen sich der mindestens eine erste Lichtstrahl und der mindestens eine zweite Lichtstrahl derart, dass der gemischte Lichtstrahl Restlicht von der mindestens einen ersten Lichtquelle und/oder Restlicht von der mindestens einen zweiten Lichtquelle aufweist. Erfindungsgemäß wird beispielsweise das Restlicht mit Infrarotanteil von der mindestens einen ersten Lichtquelle von der Aufnahmeeinheit verwendet zur Erfassung der Bilddaten. Hierdurch kann auch bei schlechten Lichtverhältnissen (z.B. bei Nacht) die Aufnahmeeinheit gute Bilder des Objekts erzeugen.

Gemäß einer Weiterentwicklung der Erfindung ist der vorbestimmte Spektralbereich beispielsweise gelb. Dadurch wird durch Mischen des sichtbaren Infrarotlichts mit dem gelben Licht eine Lichtfarbe definiert, die von dem menschlichen Auge als Orange wahrgenommen wird. Dadurch ist es möglich, die Beleuchtungseinheit gemäß dem erfindungsgemäßen Kamerasystem als Lichtquelle mit rotem Farbspektrum (sichtbarer Infrarotbereich) an der Seite eines Fahrzeugs (z.B. als Seitenmarkierungsleuchte) zu verwenden, was bei herkömmlichen Lichtquellen mit rotem Farbspektrum unzulässig ist, aufgrund gesetzlicher Vorschriften für Fahrzeugbeleuchtungen (ECE R48 Anbringung von Beleuchtungs- und Lichtsignaleinrichtungen, insbesondere Punkt 5.15, Seitenmarkierungsleuchte; ECE R91 Seitenmarkierungsleuchten, insbesondere Punkt 8.1).

Gemäß einer Weiterbildung der Erfindung erfolgt ein Mischen des mindestens einen ersten Lichtstrahls und des mindestens einen zweiten Lichtstrahls durch mindestens ein optisches Element zur Erzeugung des gemischten Lichtstrahls. Auf diese Weise kann der Überlappungsbereich der beiden Lichtstrahle vergrößert und geeignet definiert werden.

Gemäß einer Weiterentwicklung der Erfindung ist das optische Element zum Mischen von Lichtstrahlen beispielsweise eine Streuscheibe, ein Diffusor, ein Kollimator, eine Linse, ein Lichtleiter oder eine Kombination davon.

Gemäß einer Weiterbildung der Erfindung sind die mindestens eine IR-Lichtquelle und das elektrische Funktionsbauteil, das Teil einer zum Fahrzeug gehörenden Funktionseinheit ist, räumlich getrennt von der Aufnahmeeinheit, so dass sichergestellt wird, dass keine Rückreflexionen von der IR-Lichtquelle direkt in die Aufnahmeeinheit erfolgen.

Gemäß einer anderen Weiterbildung der Erfindung sind die mindestens eine IR-Lichtquelle und das elektrische Funktionsbauteil, das Teil einer zum Fahrzeug gehörenden Funktionseinheit ist, räumlich nahe beieinander liegend angeordnet, beispielsweise auf einer gemeinsamen Leiterplatte und/oder in einem gemeinsamen Gehäuse, so das durch Integration Kosten eingespart werden.

Alternativ kann die IR-Lichtquelle auf einer eigenen Platine in einem eigenen Gehäuse und das mindestens eine elektrische Funktionsbauteil kann ebenfalls auf einer eigenen Platine in einem eigenen Gehäuse angeordnet werden, wobei beide Gehäuse räumlich getrennt von der Aufnahmeeinheit in dem Kamerasystem angeordnet sind. Die Gehäuse können bevorzugt dennoch in unmittelbarer Nähe zueinander am Fahrzeug vorgesehen sein, z.B. angrenzend zueinander.

Die Beleuchtungseinheit mit der IR-Lichtquelle und dem elektrischen Funktionsbauteil befindet sich vorzugsweise in der Nähe der Aufnahmeeinheit, um eine optimale und homogene Ausleuchtung des Sichtfelds der Aufnahmeeinheit mit IR-Licht zu gewährleisten.

Gemäß einer Weiterentwicklung der Erfindung können die mindestens eine IR-Lichtquelle und das Funktionsbauteil eine gemeinsame Stromzufuhr aufweisen, so dass keine zusätzlichen elektrischen Stromanschlussleitungen notwendig sind. Speziell kann die IR-Lichtquelle beispielsweise die elektrische Stromanschlussleitung der zum Fahrzeug gehörenden Funktionseinheit verwenden, deren Bestandteil das elektrische Funktionsbauteil der Beleuchtungseinheit ist.

Üblicherweise erfolgt eine IR-Beleuchtung bei Kamerasystemen in einem Bereich von ca. 850-950 nm, welcher für das menschliche Auge nicht wahrnehmbar ist, da die Empfindlichkeit des menschlichen Auges bei ca. 380 bis 780 nm liegt.

Gemäß der Erfindung wird definiert, dass der obere Bereich der Empfindlichkeit des menschlichen Auges bei 680 nm beginnt und bei etwa 780 nm endet, wobei der von einem menschlichen Auge sichtbare Bereich zwischen 380 nm und 780 nm liegt.

Gemäß einer Weiterentwicklung der Erfindung sendet die IR-Lichtquelle Licht oberhalb des für das menschliche Auge sichtbaren Wellenlängenbereichs aus, wodurch eine verbesserte Nachtsichtfähigkeit des Kamerasystems erzielt wird.

Gemäß einer anderen Weiterentwicklung der Erfindung sendet die IR-Lichtquelle Licht in dem oberen Bereich der Empfindlichkeit des menschlichen Auges aus, was auch als Nahinfrarotlicht bezeichnet wird, das vom menschlichen Auge noch wahrnehmbar ist.

Gemäß der Erfindung kann zusätzlich zu der IR-Lichtquelle die Funktionseinheit Licht innerhalb des für das menschliche Auge sichtbaren Wellenlängenbereichs oder im oberen Bereich der Empfindlichkeit des menschlichen Auges aussenden, wodurch eine Lichtquelle mit IR-Anteil geschaffen wird. Eine derartige Lichtquelle mit IR-Anteil verbessert die Farbwiedergabe bei guten Lichtverhältnissen, wenn die IR-Lichtquelle ausgeschaltet ist, und ermöglicht gleichzeitig ein gutes Bild bei schlechten Lichtverhältnissen, wenn die IR-Lichtquelle zugeschaltet wird.

Gemäß einer Weiterentwicklung der Erfindung kann die IR-Lichtquelle fahrsituationsabhängig bzw. in Abhängigkeit von Umgebungsparametern ihren Zustand ändern, also beispielsweise nur bei schlechten Lichtverhältnissen eingeschaltet werden. Alternativ oder zusätzlich kann die Wellenlänge des von der IR-Lichtquelle ausgesendeten IR-Lichts fahrsituationsabhängig geändert werden. Ferner kann auch der Ausleuchtungsbereich, der mit der IR-Lichtquelle ausgeleuchtet wird, in Abhängigkeit von der Fahrsituation verändert werde. So kann z.B. bei einem Abbiegen IR-Licht zur Verbesserung der Sicht in einem Bereich seitlich neben dem Fahrzeug zugeschaltet werden, während dies bei Geradeausfahrt nicht zugeschaltet ist, sondern z.B. nur eine IR-Lichtquelle zur Ausleuchtung des Bereichs vor dem Fahrzeug vorgesehen ist.

Nachfolgend wird unter Bezugnahme auf die Figuren ein Ausführungsbeispiel der vorliegenden Erfindung beschrieben. Es zeigen:
Figur 1 eine schematische Ansicht eines Kamerasystems gemäß einem ersten Ausführungsbeispiel der Erfindung;
Figur 2 eine schematische Ansicht einer Funktionseinheit eines Fahrzeugs, mit der das Kamerasystem gemäß dem ersten Ausführungsbeispiel verwendet wird;
Figur 3 eine schematische Ansicht eines Kamerasystems gemäß einem zweiten Ausführungsbeispiel der Erfindung;
Figur 4 eine schematische Ansicht eines Kamerasystems gemäß einem dritten Ausführungsbeispiel der Erfindung; und
Figur 5 eine schematische Ansicht der in Figur 4 gezeigten Beleuchtungseinheit.

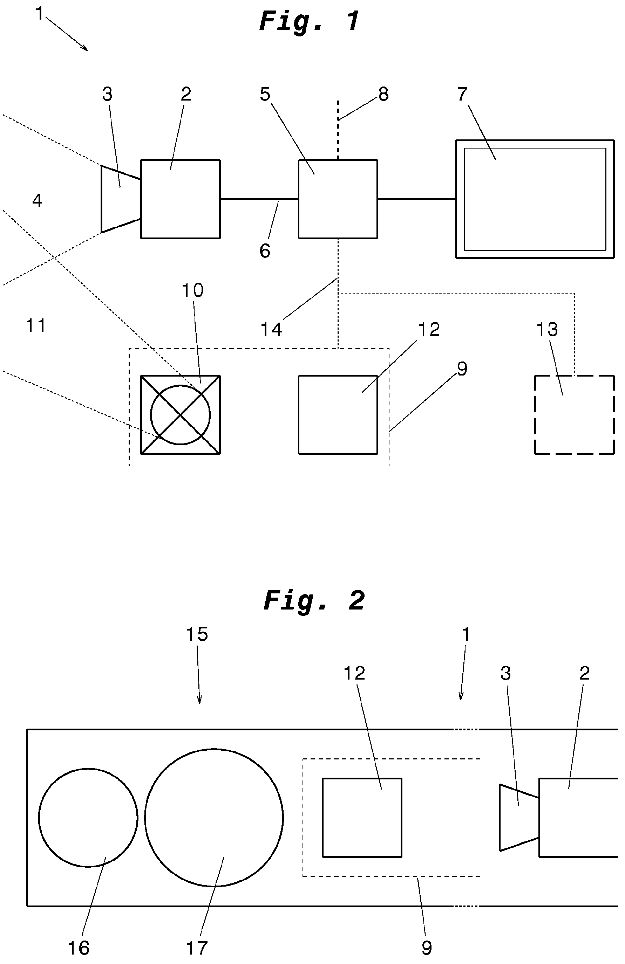

Figur 1 zeigt ein Kamerasystem 1 gemäß einem ersten Ausführungsbeispiel, das eine Aufnahmeeinheit 2 aufweist. Die Aufnahmeeinheit 2 ist beispielsweise eine Kamera mit einem Objektiv 3 zur Erfassung von Bilddaten eines Objekts (nicht gezeigt), das sich innerhalb eines Sichtfelds 4 der Aufnahmeeinheit 2 befindet.

Die Aufnahmeeinheit 2 ist gemäß dem ersten Ausführungsbeispiel mit einer Verarbeitungseinheit 5 beispielsweise drahtlos oder drahtgebunden über eine Verbindung 6 verbunden. Die Verarbeitungseinheit 5 dient zur Weiterverarbeitung der von der Aufnahmeeinheit 2 erfassten Bilddaten, um diese auf einer Wiedergabeeinheit 7 auszugeben.

Die Wiedergabeeinheit 7 ist gemäß dem ersten Ausführungsbeispiel ein Monitor zur visuellen Anzeige der von der Aufnahmeeinheit erfassten Bilddaten des Objekts. Die Verarbeitungseinheit 5 weist gemäß dem bevorzugten Ausführungsbeispiel weitere Anschlüsse 8 auf, über die beispielsweise Daten von einem Abstandssensor (nicht gezeigt) in die Verarbeitungseinheit 5 eingegeben werden können.

Wie in der Figur 1 gezeigt befindet sich in räumlicher Nähe zu der Aufnahmeeinheit 2 eine Beleuchtungseinheit 9 in dem Kamerasystem 1. Die Beleuchtungseinheit 9 gemäß dem ersten Ausführungsbeispiel weist eine IR-Lichtquelle 10 auf, deren IR-Lichtstrahl 11 zumindest teilweise das Sichtfeld 4 der Aufnahmeeinheit 2 überlappt.

Wie in der Figur 1 gezeigt weist die Beleuchtungseinheit 9 ferner ein elektrisches Funktionsbauteil 12 auf, das Teil einer bereits vorhandenen zum Fahrzeug gehörenden Funktionseinheit (nicht gezeigt) ist. Eine derartige bereits vorhandene und zum Fahrzeug gehörende Funktionseinheit wird später unter Bezugnahme auf die Figur 2 genauer beschrieben und kann gemäß dem ersten Ausführungsbeispiel ein Bestandteil der Fahrzeugbeleuchtung sein, wie beispielsweise Blinkleuchte, Begrenzungsleuchte, Fahrscheinwerfer, Rückfahrscheinwerfer, Umgebungsleuchte, Einstiegsleuchte, etc., ein Sensor sein, wie beispielsweise Radar, Ultraschall, etc., eine Einrichtung für einen Funkempfang sein, wie beispielsweise GPS-Antenne, Mautantenne, CB-Funkantenne, Radioantenne, etc., und/oder ein Bedienelement des Fahrzeugs sein, wie beispielsweise ein elektrischer Griff/Knopf für einen Türöffner, eine Bedieneinheit für eine Ladeklappe, einen Kran, etc.

Gemäß dem ersten Ausführungsbeispiel sind die IR-Lichtquelle 10 und das elektrische Funktionsbauteil 12 der Beleuchtungseinheit 9 in räumlicher Nähe zueinander angeordnet. Speziell sind gemäß dem ersten Ausführungsbeispiel die IR-Lichtquelle 10 und das elektrische Funktionsbauteil 12 in einem gemeinsamen Gehäuse angeordnet.

Alternativ können die IR-Lichtquelle 10 und das elektrische Funktionsbauteil 12 in separaten Gehäusen vorgesehen werden.

Gemäß dem ersten Ausführungsbeispiel sind die IR-Lichtquelle 10 und das elektrische Funktionsbauteil 12 auf einer gemeinsamen Platine ausgebildet, wobei alternativ die IR-Lichtquelle 10 und das elektrische Funktionsbauteil 12 auf getrennten Leiterplatten ausgebildet sein können.

Wie in Figur 1 gezeigt weist das Kamerasystem 1 gemäß dem ersten Ausführungsbeispiel ferner ein Steuermodul 13 auf, um die Beleuchtungseinheit 9 anzusteuern. Gemäß dem ersten Ausführungsbeispiel wird dadurch beispielsweise die IR-Ausleuchtung durch die IR-Lichtquelle 10 fahrsituationsabhängig geändert. Beispielsweise kann fahrsituationsabhängig die IR-Lichtquelle 10 ein- und ausgeschaltet werden, sowie die Wellenlänge des IR-Lichts geeignet an die Umgebungsbedingungen angepasst werden.

Gemäß dem in der Figur 1 gezeigten ersten Ausführungsbeispiel ist das Steuermodul 13 ferner mit der Verarbeitungseinheit 5 gekoppelt, kann aber alternative nur mit der Beleuchtungseinheit 9 oder nur mit der Verarbeitungseinheit 5 verbunden sein. Weitere Verbindungen zwischen dem Steuermodul 13 und irgendwelchen weiteren Komponenten des Kamerasystems 1 sind denkbar.

Wie oben erwähnt, kann das in der Figur 1 gezeigte Funktionsbauteil 12 der Beleuchtungseinheit 9 beispielsweise Teil einer zum Fahrzeug gehöhrenden Funktionseinheit sein, die Licht innerhalb des für das menschliche Auge sichtbaren Wellenlängenbereichs aussendet zusätzlich oder alternativ zu der Aussendung des IR-Lichts durch die IR-Lichtquelle 10. Dabei kann das Aus- bzw. Zuschalten der IR-Lichtquelle 10 und/oder der Funktionseinheit durch das Steuermodul 13 erfolgen.

Figur 2 zeigt eine schematische Ansicht des Kamerasystems 1 gemäß Figur 1 als Bestandteil einer Fahrzeugbeleuchtung 15, die ein konkretes Beispiel für die oben genannte zum Fahrzeug gehörende Funktionseinheit gemäß der Erfindung ist.

Wie in Figur 2 gezeigt, weist die Fahrzeugbeleuchtung 15 eine Blinkleuchte 16, einen Scheinwerfer 17 und das Kamerasystem 1 gemäß Figur 1 auf, das nur teilweise in Figur 2 dargestellt ist.

Wie in Figur 2 gezeigt ist das Funktionsbauteil 12 des Kamerasystems 1 ein Teil der als Funktionseinheit gemäß der Erfindung dienenden Fahrzeugbeleuchtung 15. Das Funktionsbauteil 12 des Kamerasystems 1 ist gemäß einem ersten Ausführungsbeispiel der Erfindung auf der Leiterplatte der Fahrzeugbeleuchtung 15 angeordnet und verwendet dieselbe Stromversorgung.

Gemäß dem ersten Ausführungsbeispiel der Erfindung ist das Funktionsbauteil 12 ferner in dem Gehäuse der Fahrzeugbeleuchtung 15 untergebracht, kann aber alternativ auch in einem eigenen Gehäuse angeordnet werden.

Ferner kann gemäß der Erfindung das in Figur 2 gezeigte Blinklicht 16 und/oder der Scheinwerfer 17 jeweils als elektrische Funktionseinheit dienen, so dass das Funktionsbauteil 12 Bestandteil des Blinklichts 16 und/oder des Scheinwerfers 17 ist.

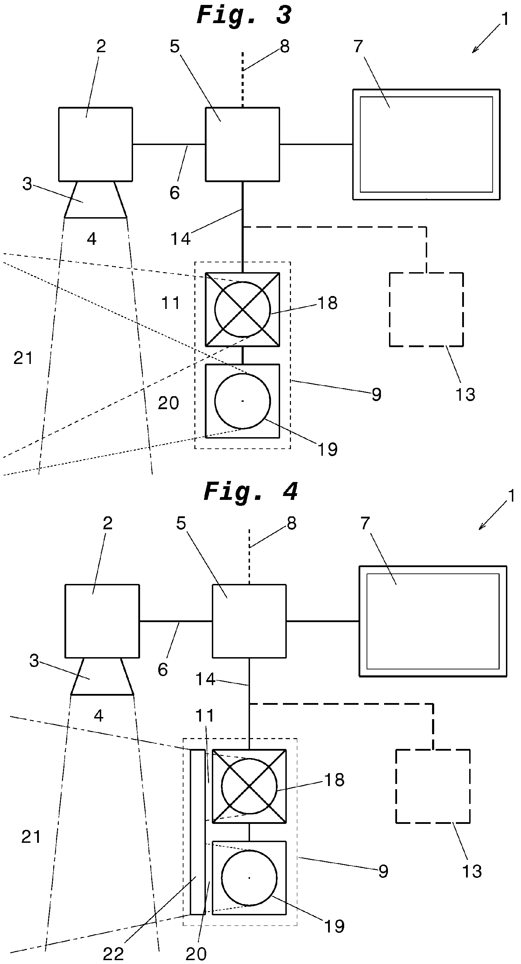

Figur 3 zeigt eine schematische Darstellung des Kamerasystems 1 gemäß einem zweiten Ausführungsbeispiel der Erfindung. Das zweite Ausführungsbeispiel der Erfindung unterscheidet sich von dem oben beschriebenen ersten Ausführungsbeispiel der Erfindung insbesondere darin, dass die Beleuchtungseinheit 9 eine erste Lichtquelle 18 und eine zweite Lichtquelle 19 aufweist. Gemäß dem zweiten Ausführungsbeispiel sendet die erste Lichtquelle 18 Licht im Nahinfrarotbereich aus, also Infrarotlicht, das von dem menschlichen Auge noch wahrnehmbar ist. Die zweite Lichtquelle 19 sendet hingegen ein Licht in einem Spektrum aus, das einen für das menschliche Auge sichtbaren vorbestimmen Spektralbereich hat. Vorzugsweise sendet die zweite Lichtquelle 19 Licht mit einem gelben Spektralanteil aus.

Wie in Figur 3 gezeigt, deckt die erste Lichtquelle 18 einen IR-Beleuchtungsbereich 11 ab und die zweite Lichtquelle 19 deckt einen Beleuchtungsbereich 20 ab. Gemäß diesem Ausführungsbeispiel ist der von der zweiten Lichtquelle 19 ausgeleuchtete Beleuchtungsbereich 20 ein gelber Beleuchtungsbereich 20.

Wie ferner der Figur 3 zu entnehmen ist, überlappen sich der IR-Beleuchtungsbereich 11 und der gelbe Beleuchtungsbereich 20 zur Bildung eines Beleuchtungsbereichs 21, der einem menschlichen Betrachter Orange erscheint aufgrund der Mischung der Farben Rot und Gelb.

In Abhängigkeit von dem vorbestimmten Spektralbereich der zweiten Lichtquelle 19 kann die von einem Menschen wahrnehmbare Farbe in den Beleuchtungsbereich 21 entsprechend vorgegeben werden.
Die Beleuchtungseinheit 9 gemäß dem zweiten Ausführungsbeispiel kann beispielsweise als Seitenmarkierungsleuchte eines Fahrzeugs verwendet werden. Aufgrund der Farbmischung des Infrarotlichts von der ersten Lichtquelle 18 und dem gelben Licht von der zweiten Lichtquelle 19 kann eine zulassungsfähige Seitenbegrenzungsleuchte geschaffen werden, die die gesetzlichen Vorschriften für Fahrzeugbeleuchtungen erfüllt.

Obwohl in Figur 3 die erste Lichtquelle 18 und die zweite Lichtquelle 19 in einem gemeinsamen Gehäuse gezeigt sind, können dies in getrennten Gehäusen untergebracht werden. Diese sind vorzugsweise in räumlicher Nähe zueinander, um einen geeigneten gemeinsamen sich überlappenden Beleuchtungsbereich zu erzeugen.

Gemäß der Erfindung kann auch nur eine einzelne Lichtquelle in der Beleuchtungseinheit 9 vorgesehen sein, die die Funktionen der ersten und zweiten Lichtquelle 18, 19 gemäß dem zweiten Ausführungsbeispiel übernimmt, also in der Lage ist Licht mit einem Infrarotanteil und einem vorbestimmten Spektralbereich auszusenden.

Figur 4 zeigt eine schematische Ansicht eines Kamerasystems gemäß einem dritten Ausführungsbeispiel der Erfindung.

Das dritte Ausführungsbeispiel der Erfindung unterscheidet sich von dem in Figur 3 gezeigten zweiten Ausführungsbeispiel dadurch, dass die Beleuchtungseinheit 9 zusätzlich ein optisches Element 22 aufweist. Das optische Element 22 ist beispielsweise eine Streuscheibe, ein Diffusor, ein Kollimator, eine Linse, ein Lichtleiter, etc. oder Kombinationen davon.

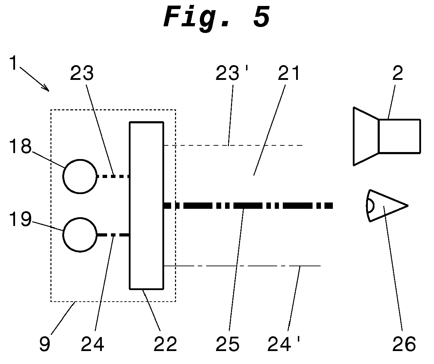

Das optische Element 22 ist insbesondere in der Lage das Infrarotlicht, das von der ersten Lichtquelle 18 ausgesendet wird, mit dem gelben Licht, das von der zweiten Lichtquelle 19 ausgesendet wird, derart zu mischen, dass der orangene Beleuchtungsbereich 21 erzeugt wird. Das optische Element 22 gemäß dem dritten Ausführungsbeispiel reduziert die Beleuchtungsbereiche 11 und 20 der ersten Lichtquelle 18 bzw. der zweiten Lichtquelle 19 und vergrößert dadurch den gewünschten überlappenden Beleuchtungsbereich 21. Der gewünschte Beleuchtungsbereich 21 gemäß Figur 4 wird nachfolgend unter Bezugnahme auf Figur 5 genauer beschrieben.

Figur 5 zeigt eine schematische Ansicht der in Figur 4 gezeigten Beleuchtungseinheit 9.

Wie in Figur 5 gezeigt, mischt das optische Element 22 einen Infrarotlichtstrahl 23 von der ersten Lichtquelle 18 mit einem gelben Lichtstrahl 24 von der zweiten Lichtquelle 19 derart, dass ein gemischter Lichtstrahl 25 erzeugt wird, der von einem menschlichen Auge 26 als orangenes Licht wahrgenommen wird. Wie in Figur 5 ferner gezeigt, weist der gemischte Lichtstrahl 25 ein Restlicht 23' von der ersten Lichtquelle 18 sowie Restlicht 24' von der zweiten Lichtquelle 19 auf.

Insbesondere das Restlicht 23' von der ersten Lichtquelle 18, in dem ein IR-Anteil enthalten ist, wird von der Aufnahmeeinheit 2 des erfindungsgemäßen Kamerasystems verwendet, um beispielsweise bei schlechten Lichtverhältnissen (bei Nacht) ein gutes Bild erfassen zu können.

Obwohl in den oben beschriebenen Ausführungsbeispielen nur eine IR-Lichtquelle in der Beleuchtungseinheit 9 gezeigt ist, ist es selbstverständlich, dass eine Mehrzahl derartiger IR-Lichtquellen in der Beleuchtungseinheit vorgesehen werden können, zusammen mit einer entsprechenden Mehrzahl von elektrischen Funktionsbauteilen, die Teil einer Mehrzahl von entsprechenden bereits vorhandenen und zum Fahrzeug gehörenden Funktionseinheiten sind.

Ferner kann mehr als nur eine Aufnahmeeinheit in dem Kamerasystem gemäß der Erfindung vorgesehen werden. Die oben genannten Komponenten des Kamerasystems können ferner beispielsweise alle in einem gemeinsamen Gehäuse untergebracht werden, oder aber je nach Bedarf in einzelnen Gehäusen oder beliebig kombiniert in gemeinsamen Gehäusen geeignet untergebracht werden.

Obwohl im vorangegangen eine Fahrzeugbeleuchtung als ein konkretes Beispiel für eine elektrische Funktionseinheit gemäß der Erfindung beschrieben wurde, ist es selbstverständlich, dass nicht nur die im vorangegangen beschriebenen Komponenten eines Fahrzeugs als elektrische Funktionseinheit dienen können, sondern beliebig andere an einem Fahrzeug bereits vorhandene elektrische Vorrichtungen.

Ferner, obwohl in den obigen Ausführungsbeispielen eine erste und zweite Lichtquelle in der Beleuchtungseinheit gezeigt sind, kann die Beleuchtungseinheit eine einzelne Lichtquelle aufweisen, die die Funktion der ersten und der zweiten Lichtquelle übernimmt.

In dem Vorangegangenen ist als ein Beispiel für den vorbestimmten Spektralbereich für das Licht, das von der zweiten Lichtquelle 19 ausgesendet wird, der gelbe Spektralbereich genannt. Je nach gewünschter darzustellender Farbe kann ein beliebiger Spektralbereich vorgesehen werden, der für das menschliche Auge sichtbar ist.

Ferner ist es selbstverständlich, dass mehr als zwei Lichtquellen in der Beleuchtungseinheit 9 vorgesehen werden können, die jeweils Licht mit entsprechenden Spektralbereichen aussenden.

Weitere Änderungen und Modifikationen der oben beschriebenen Ausführungsbeispiel des Kamerasystems sind möglich, ohne den Bereich der Erfindung zu verlassen.

### Bezugszeichenliste

- 1: Kamerasystem
- 2: Aufnahmeeinheit
- 3: Objektiv
- 4: Sichtfeld
- 5: Verarbeitungseinheit
- 6: Verbindung
- 7: Wiedergabeeinheit
- 8: weitere Anschlüsse
- 9: Beleuchtungseinheit
- 10: IR-Lichtquelle
- 11: IR-Beleuchtungsbereich
- 12: Funktionsbauteil
- 13: Steuermodul
- 14: Verbindung
- 15: Fahrzeugbeleuchtung
- 16: Blinkleuchte
- 17: Scheinwerfer
- 18: erste Lichtquelle
- 19: zweite Lichtquelle
- 20: Beleuchtungsbereich (gelb)
- 21: Beleuchtungsbereich (orange)
- 22: optisches Element
- 23: IR-Lichtstrahl
- 23': Restlicht
- 24: gelber Lichtstrahl
- 24': Restlicht
- 25: gemischter Lichtstrahl
- 26: menschliches Auge

## Patentansprüche

1. Kamerasystem für ein Fahrzeug, mit
einer Aufnahmeeinheit (2) zur Erfassung von Bilddaten eines Objekts in der Nähe des Fahrzeugs;
einer Verarbeitungseinheit (5) zur Verarbeitung der erfassten Bilddaten;
einer Wiedergabeeinheit (7) zur Wiedergabe der verarbeiteten Bilddaten; und
einer Beleuchtungseinheit (9) zur Beleuchtung des Objekts, wobei
die Beleuchtungseinheit (9) ausgebildet ist zum Aussenden von Infrarotlicht durch mindestens eine IR-Lichtquelle (10), und wobei die Beleuchtungseinheit (9) mindestens ein elektrisches Funktionsbauteil (12) aufweist, das ein Teil einer anderen zum Fahrzeug gehörenden Funktionseinheit ist, und/oder
die Beleuchtungseinheit (9) ausgebildet ist zum Aussenden von Licht mit einem Spektrum, das einen für das menschliche Auge sichtbaren vorbestimmten Spektralbereich aufweist.

2. Kamerasystem nach Anspruch 1, bei dem die Beleuchtungseinheit (9) als einzelne Lichtquelle ausgebildet ist, die das Licht in dem Infrarotbereich und in dem vorbestimmten Spektralbereich aussendet.

3. Kamerasystem nach Anspruch 1 oder 2, bei dem die Beleuchtungseinheit (9) mindestens eine erste Lichtquelle (18) und mindestens eine zweite Lichtquelle (19) aufweist, die mindestens eine erste Lichtquelle (18) ausgebildet ist zum Aussenden von mindestens einem ersten Lichtstrahl (23) in dem sichtbaren Infrarotbereich, und die mindestens eine zweite Lichtquelle (19) ausgebildet ist zum Aussenden von mindestens einem zweiten Lichtstrahl (24) in dem vorbestimmten Spektralbereich, wobei der mindestens eine erste Lichtstrahl (23) und des mindestens eine zweite Lichtstrahl (24) sich überlappen zur Erzeugung eines gemischten Lichtstrahls (25), der vom menschlichen Auge wahrnehmbar ist.

4. Kamerasystem nach Anspruch 3, bei dem das Überlappen des mindestens einen ersten Lichtstrahls (23) und des mindestens einen zweiten Lichtstrahls (24) derart erfolgt, dass der gemischte Lichtstrahl (25) Restlicht (23') von der mindestens einen ersten Lichtquelle (18) und/oder Restlicht (24') von der mindestens einen zweiten Lichtquelle (19) aufweist.

5. Kamerasystem nach Anspruch 4, bei dem die Aufnahmeeinheit (2) das Restlicht (23') mit Infrarotanteil von der mindestens einen ersten Lichtquelle (18) zur Erfassung der Bilddaten verwendet.

6. Kamerasystem nach einem der vorangegangenen Ansprüche, bei dem der vorbestimmte Spektralbereich Gelb ist.

7. Kamerasystem nach einem der vorangegangenen Ansprüche, bei dem die Beleuchtungseinheit (9) als Seitenbegrenzungsleuchte des Fahrzeugs ausgebildet ist.

8. Kamerasystem nach einem der Ansprüche 3 bis 7, bei dem ein Mischen des mindestens einen ersten Lichtstrahls (23) und des mindestens einen zweiten Lichtstrahls (24) durch mindestens ein optisches Element (22) erfolgt zur Erzeugung des gemischten Lichtstrahls (25).

9. Kamerasystem nach Anspruch 8, bei dem das optische Element (25) eine Streuscheibe, ein Diffusor, ein Kollimator, eine Linse und/oder ein Lichtleiter ist.

10. Kamerasystem nach einem der vorangegangenen Ansprüche, bei der
die mindestens eine IR-Lichtquelle (10) und das elektrische Funktionsbauteil (12) räumlich von der Aufnahmeeinheit (2) getrennt sind.

11. Kamerasystem nach einem der vorangegangenen Ansprüche, bei dem
die mindestens eine IR-Lichtquelle (10) und das elektrische Funktionsbauteil (12) räumlich nahe beieinander liegen, und/oder in einem gemeinsamen Gehäuse angeordnet sind, und/oder auf einer gemeinsamen Leiterplatte angeordnet sind, und/oder eine gemeinsame Stromzufuhr aufweisen, und/oder ein einzelnes Bauteil bilden zur Bereitstellung einer Lichtquelle mit IR-Anteil.

12. Kamerasystem nach einem der vorangegangenen Ansprüchen, bei dem
die mindestens eine IR-Lichtquelle (10) Licht oberhalb des für das menschliche Auge sichtbaren Wellenlängenbereichs aussendet.

13. Kamerasystem nach einem der vorangegangenen Ansprüchen, bei dem
die mindestens eine IR-Lichtquelle (18) Licht im oberen Bereich des für das menschliche Auge sichtbaren Wellenlängenbereichs aussendet.

14. Kamerasystem nach einem der vorangegangenen Ansprüchen, bei dem
die zum Fahrzeug gehörende Funktionseinheit Licht innerhalb des für das menschliche Auge sichtbaren Wellenlängenbereichs aussendet.

15. Kamerasystem nach einem der vorangegangenen Ansprüchen, bei dem
die Funktionseinheit Bestandteil einer Fahrzeugbeleuchtung (15) ist, und/oder einen Sensor aufweist, und/oder eine Einrichtung für einen Funkempfang ist, und/oder ein Bedienelement für das Fahrzeug ist.

16. Kamerasystem nach einem der vorangegangenen Ansprüchen, bei dem
die Beleuchtungseinheit (9) fahrsituationsabhängig und/oder umgebungsparameterabhängig ihren Zustand ändert.

## Geänderte Patentansprüche

### Geänderte Patentansprüche gemäss Regel 137(2) EPÜ.

1. Kamerasystem für ein Fahrzeug, mit
einer Aufnahmeeinheit (2) zur Erfassung von Bilddaten eines Objekts in der Nähe des Fahrzeugs;
einer Verarbeitungseinheit (5) zur Verarbeitung der erfassten Bilddaten;
einer Wiedergabeeinheit (7) zur Wiedergabe der verarbeiteten Bilddaten; und
einer Beleuchtungseinheit (9) zur Beleuchtung des Objekts, wobei
die Beleuchtungseinheit (9) ausgebildet ist zum Aussenden von Infrarotlicht durch mindestens eine IR-Lichtquelle (10), und wobei die Beleuchtungseinheit (9) mindestens ein elektrisches Funktionsbauteil (12) aufweist, das ein Teil einer anderen zum Fahrzeug gehörenden Funktionseinheit ist, und/oder
die Beleuchtungseinheit (9) ausgebildet ist zum Aussenden von Licht mit einem Spektrum, das einen für das menschliche Auge sichtbaren vorbestimmten Spektralbereich aufweist, wobei
die Beleuchtungseinheit (9) mindestens eine erste Lichtquelle (18) und mindestens eine zweite Lichtquelle 19 aufweist, die mindestens eine erste Lichtquelle (18) ausgebildet ist zum Aussenden von mindestens einem ersten Lichtstrahl (23) in dem Infrarotbereich, und die mindestens eine zweite Lichtquelle (19) ausgebildet ist zum Aussenden von mindestens einem zweiten Lichtstrahl (24) in dem vorbestimmten Spektralbereich, wobei der mindestens eine erste Lichtstrahl (23) und der mindestens eine zweite Lichtstrahl (24) sich überlappen zur Erzeugung eines gemischten Lichtstrahls (25), der vom menschlichen Auge wahrnehmbar ist.

2. Kamerasystem nach Anspruch 1, bei dem die Beleuchtungseinheit (9) als einzelne Lichtquelle ausgebildet ist, die das Licht in dem Infrarotbereich und in dem vorbestimmten Spektralbereich aussendet.

3. Kamerasystem nach Anspruch 1, bei dem das Überlappen des mindestens einen ersten Lichtstrahls (23) und des mindestens einen zweiten Lichtstrahls (24) derart erfolgt, dass der gemischte Lichtstrahl (25) Restlicht (23') von der mindestens einem ersten Lichtquelle (18) und/oder Restlicht (24') von der mindestens einen zweiten Lichtquelle (19) aufweist.

4. Kamerasystem nach Anspruch 3, bei dem die Aufnahmeeinheit (2) das Restlicht (23') mit Infrarotanteil von der mindestens einen ersten Lichtquelle (18) zur Erfassung der Bilddaten verwendet.

5. Kamerasystem nach einem der vorangegangenen Ansprüche, bei dem der vorbestimmte Spektralbereich Gelb ist.

6. Kamerasystem nach einem der vorangegangenen Ansprüche, bei dem die Beleuchtungseinheit (9) als Seitenbegrenzungsleuchte des Fahrzeugs ausgebildet ist.

7. Kamerasystem nach einem der Ansprüche 1 bis 6, bei dem ein Mischen des mindestens einen ersten Lichtstrahls (23) und des mindestens einen zweiten Lichtstrahls (24) durch mindestens ein optisches Element (22) erfolgt zur Erzeugung des gemischten Lichtstrahls (25).

8. Kamerasystem nach Anspruch 7, bei dem das optische Element (25) eine Streuscheibe, ein Diffusor, ein Kollimator, eine Linse und/oder ein Lichtleiter ist.

9. Kamerasystem nach einem der vorangegangenen Ansprüche, bei der
die mindestens eine IR-Lichtquelle (10) und das elektrische Funktionsbauteil (12) räumlich von der Aufnahmeeinheit (2) getrennt sind.

10. Kamerasystem nach einem der vorangegangenen Ansprüche, bei dem
die mindestens eine IR-Lichtquelle (10) und das elektrische Funktionsbauteil (12) räumlich nahe beieinander liegen, und/oder in einem gemeinsamen Gehäuse angeordnet sind, und/oder auf einer gemeinsamen Leiterplatte angeordnet sind, und/oder eine gemeinsame Stromzufuhr aufweisen, und/oder ein einzelnes Bauteil bilden zur Bereitstellung einer Lichtquelle mit IR-Anteil.

11. Kamerasystem nach einem der vorangegangenen Ansprüche, bei dem
die mindestens eine IR-Lichtquelle (10) Licht oberhalb des für das menschliche Auge sichtbaren Wellenlängenbereichs aussendet.

12. Kamerasystem nach einem der vorangegangenen Ansprüchen, bei dem
die mindestens eine IR-Lichtquelle (18) Licht im oberen Bereich des für das menschliche Auge sichtbaren Wellenlängenbereichs aussendet.

13. Kamerasystem nach einem der vorangegangenen Ansprüche, bei dem
die zum Fahrzeug gehörende Funktionseinheit Licht innerhalb des für das menschliche Auge sichtbaren Wellenlängenbereichs aussendet.

14. Kamerasystem nach einem der vorangegangenen Ansprüche, bei dem
die Funktionseinheit Bestandteil einer Fahrzeugbeleuchtung (15) ist, und/oder einen Sensor aufweist, und/oder eine Einrichtung für einen Funkempfang ist, und/oder ein Bedienelement für das Fahrzeug ist.

15. Kamerasystem nach einem der vorangegangenen Ansprüche, bei dem
die Beleuchtungseinheit (9) fahrsituationsabhängig und/oder umgebungsparameterabhängig ihren Zustand ändert.
